# EUROPEAN PATENT APPLICATION

(11) **EP 4 411 969 A1**
(43) Date of publication of application: **07.08.2024**
(21) Application number: 24154662.1
(22) Date of filing: 30.01.2024
(51) Int. Cl.: H01M 50/507, H01M 50/583, H01M 50/516

(54) **A POWER UNIT**

(30) Priority: 06.02.2023 IN 202341007314
(71) Applicant: TVS Motor Company Limited, 600006 Chennai (IN)
(72) Inventor: Singh, Urvashi, 600006 Chennai (IN); Kishore, Mulugu Sai Nanda, 600006 Chennai (IN); Kumar, Prabhanjan, 600006 Chennai (IN); Nileshwar, Pramila Rao, 600006 Chennai (IN); Sagare, Datta Rajaram, 600006 Chennai (IN)
(74) Representative: Patentanwaltskanzlei Matschnig & Forsthuber OG

(57) **Abstract**

A power unit (100) comprising a plurality of cells (102) and each of the plurality of cells (102) are connected using one or more busbars (200). The each of the one or more busbars (200) comprises of a plurality of interconnectors (204, 400), and the each of the plurality of interconnectors (204, 400) comprising a neck fusing region (208) and a second region (210). The neck fusing region (208) being disposed downwardly to connect with the second region (210). The neck fusing region (208) being configured to act as a fusing element when a pre-defined current passes through said neck fusing region (208).

## Description

### TECHNICAL FIELD

The present subject matter relates to a power unit, more particularly, a power unit having an inherent fusing element.

### BACKGROUND

In general, a propulsion unit in a vehicle is configured to propel the vehicle. The propulsion unit varies from an internal combustion engine to an electric motor being electrically operated by a power unit, such as a battery, or a combination of both. The battery is consisting of a plurality of cells which produces power to propel the electric motor of the vehicle.

The plurality of cells of the battery is connected with each other in a series and parallel circuit through an interconnector. The interconnector is a metal plate which receives the plurality of cells and conducts electricity through each terminals of the plurality of cells.

However, during conduction of electricity, one or more cells may conduct electricity more or less than a set limit. Further, conduction of electricity across the battery, can be impeded if the one or more cells becomes faulty. In such case, the overall power rating of the battery reduces, and the entire battery is unable to function at the rated power value. This in turn reduces the life of the battery and also damages the battery totally.

In order to prevent damage of the entire battery, short circuiting of one or more faulty cells in the battery is developed in the art. In a known art, an external electrical fuse is connected with the plurality of cells and the external electrical fuse, and the plurality of cells are electrically connected together in a battery management system (BMS) of the battery. This configuration short circuits the faulty cells and prevents damage to the entire battery. However, the design and packaging of an electrical fuse inside the battery is complex and the electrical fuse also accommodates more space inside the battery.

Furthermore, a battery guideline states that - "REESS shall have Active paralleling circuits for the parallel connection of cells and strings to eliminate circulating currents. These power semiconductor devices used for interconnecting strings will also act as protection/safety switches which will detect any faulty strings and isolate them. They will allow bidirectional flow of currents to charge and discharge the pack. The parallel cells and strings will get isolated if it is detected to be faulty. Therefore, active paralleling should be mandatory in the battery packs. Alternatively, fuses / bond wires can also be used to prevent circulating currents flowing through the cells connected in parallel." Such precautionary devices helps in isolation of faulty cells connected in parallel. However, compliance of this requirement warrants complex design changes to be introduced to the battery pack for isolation of faulty cells. However, the use of external precautionary devices increases the overall design complexity, packaging requirements and overall cost of the battery pack.

Hence it is an object of the present invention to provide a design of a power unit which enables short circuiting and fusing of a faulty cell from another cell and thereby prevent damage of the power unit and to overcome other related problems known in the art.

It is also an object of the present invention to provide an interconnector design with inherent fusing element for overcoming the need of an external electrical fuse.

It is also an object of the present invention to provide a power unit which reduces risk of thermal runaway and increases the life of the cells disposed in the power unit.

It is also an object of the present invention to provide ease of cell balancing without depleting the charge of individual cells of the power unit.

### SUMMARY OF THE INVENTION

The present subject matter provides a design for an interconnector in a power unit comprising an inherent neck fusing element and the neck fusing element being configured to isolate one or more faulty cells from other cells to prevent short circuiting of the power unit and thereby preventing thermal runway of the power unit.

As per an aspect of the present invention, a power unit comprising a plurality of cells being connected using one or more bus bars. The one or more busbars comprising a plurality of interconnectors. Further, each of the plurality of interconnectors comprising a neck fusing region and a second region. The neck fusing region is disposed downwardly to connect with the second region. The neck fusing region acts as a fusing element when a pre-defined passes through said neck fusing region.

As per an embodiment, the second region is disposed below the first region. The neck fusing region is configured to protrude outwards from a lateral axis (X-X') of the second region at a predetermined angle. The predetermined angle being between a range of 2 to 30 degrees. The neck fusing region comprising one or more intermediate chords.

As per another embodiment, the neck fusing region comprising one chord of the one or more intermediate chords being disposed from a centre of at least one peripheral edge of the second region. Further, the neck fusing region being disposed on peripheral edges above the second region.

As per another embodiment, the said neck fusing region comprising two chords of the one or more intermediate chords and the two chords of the one or more intermediate chords is separated by an air gap.

As per another embodiment, the second region is configured to have a first segment and a second segment. The first segment and the second segment is configured to have one or more openings for electrically connecting a cell from the plurality of cells. Further, a slit exists between the first segment and the second segment of the second region.

As per another embodiment, the one or more openings enable electrical connection of the second region to at least one of a positive terminal or a negative terminal of each of the plurality of cells, wherein the electrical connection is enabled using at least one of spot welding, wire bonding, laser welding, and an ultrasonic welding.

As per another embodiment, the bus bar comprising a first column and a second column, and the plurality of interconnectors are disposed in one of the first column and the second column.

As per another aspect of the present invention, one or more busbars comprising a plurality of interconnectors. Further, each of the plurality of interconnectors comprising a neck fusing region and a second region. The neck fusing region is disposed downwardly to connect with the second region. The neck fusing region acts as a fusing element when a pre-defined passes through said neck fusing region.

As per another embodiment, the second region is disposed below the first region. The neck fusing region is configured to protrude outwards from a lateral axis (X-X') of the second region at a predetermined angle. The predetermined angle being between a range of 2 to 30 degrees. The neck fusing region comprising one or more intermediate chords.

As per another embodiment, the neck fusing region comprising one chord of the one or more intermediate chords being disposed from a centre of at least one peripheral edge of the second region. Further, the neck fusing region being disposed on peripheral edges above the second region.

As per another embodiment, the said neck fusing region comprising two chords of the one or more intermediate chords and the two chords of the one or more intermediate chords is separated by an air gap.

As per another embodiment, the second region is configured to have a first segment and a second segment. The first segment and the second segment is configured to have one or more openings for electrically connecting a cell from the plurality of cells. Further, a slit exists between the first segment and the second segment of the second region.

As per another embodiment, the one or more openings enable electrical connection of the second region to at least one of a positive terminal or a negative terminal of each of the plurality of cells, wherein the electrical connection is enabled using at least one of spot welding, wire bonding, laser welding, and an ultrasonic welding.

As per another embodiment, the bus bar comprising a first column and a second column, and the plurality of interconnectors are disposed in one of the first column and the second column.

It is to be understood that both the foregoing general description and the following detailed description are exemplary and explanatory only and are not restrictive of the invention, as claimed.

### BRIEF DESCRIPT ION OF THE DRAWINGS

The present invention is described with reference to figures, block diagrams and flowcharts. This invention is implementable in two-wheeled, three wheeled and four wheeled vehicles. The same numbers are used throughout the drawings to reference like features and components. Further, the inventive features of the invention are outlined in the appended claims.
**Figure 1** illustrates a perspective view of a power unit, in accordance with an embodiment of the present subject matter.
**Figure 2a** illustrates a top perspective view of a bus bar of the power unit comprising a plurality of interconnectors, in accordance with an embodiment of the present subject matter.
**Figure 2b** illustrates a top perspective view of a first embodiment of an interconnector of the bus bar, in accordance with an embodiment of the present subject matter.
**Figure 3** illustrates a top view of a bus bar of the power unit comprising a plurality of interconnectors, in accordance with an embodiment of the present subject matter.
**Figure 4a** illustrates a top perspective view of a bus bar of the power unit comprising a second embodiment of the plurality of interconnectors, in accordance with an embodiment of the present subject matter.
**Figure 4b** illustrates a top perspective view of the second embodiment of an interconnector of the bus bar, in accordance with an embodiment of the present subject matter.

### DETAILED DESCRIPTION OF THE DRAWINGS

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

The present subject matter is further described with reference to accompanying figures. It should be noted that the description and figures merely illustrate the principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

Additionally, all numerical terms, such as, but not limited to, "first", "second", "third", "primary", "secondary", "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

The embodiments of the present invention will now be described in detail with reference to the accompanying drawings.

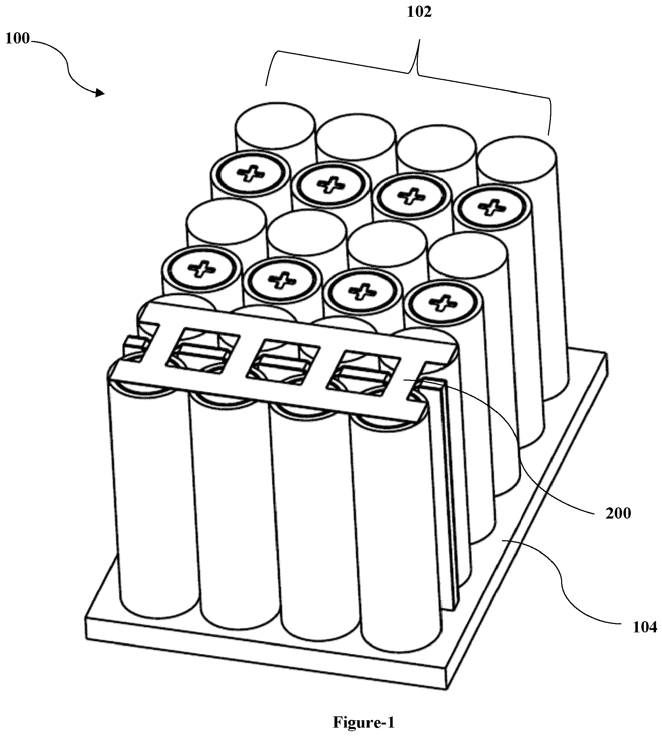

**Figure 1** illustrates a perspective view of a power unit (100), in accordance with an embodiment of the present subject matter. A power unit (100) comprising a plurality of cells (102) being disposed in a plurality of rows and plurality of columns (not shown) in the power unit (100). In on embodiment, the power unit (100) is a battery. The plurality of cells (102) are disposed on a power unit bottom plate (104). The plurality of cells (102) is alternatively arranged as a connection of positive and negative terminals of each cell of the plurality of cells (102) and are electrically connected in a circuit through a series and parallel connection. The plurality of cells (102) are connected to each other through a electrical connection by a bus bar (200). The bus bar (200) is configured to connect a positive terminals of one column of said plurality of cells (102) and, a negative terminal of another column of said plurality of cells (102).

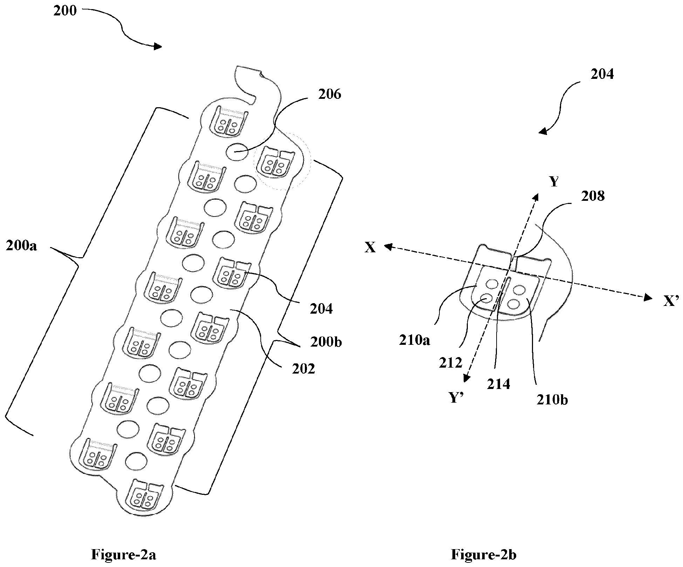

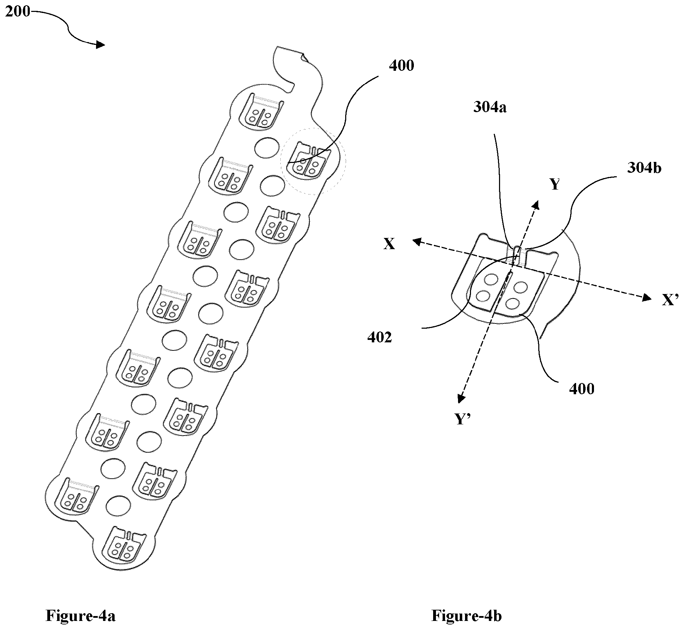

**Figure 2a** illustrates a top perspective view of a bus bar (200) of the power unit (100) comprising a plurality of interconnectors (204), in accordance with an embodiment of the present subject matter. **Figure 2b** illustrates a top perspective view of a first embodiment of an interconnector (204) of the bus bar (200), in accordance with an embodiment of the present subject matter. **Figure 4a** illustrates a top perspective view of a bus bar (200) of the power unit (100) comprising a second embodiment of the plurality of interconnectors (400), in accordance with an embodiment of the present subject matter. For brevity, figures 2a, 4a and 2b shall be discussed together.

A bus bar (200) being a thin metal plate having a top surface (202). The bus bar (200) is bifurcated into a first column (200a) and a second column (200b). The first column (200a) and the second column (200b) is centrally divided through a plurality of holes (206). The plurality of holes (206) are aligned in a zig zag pattern in a central region of the top surface (202) of the bus bar (200). The first column (200a) and the second column (200b) comprising of a plurality of interconnectors (204). In one embodiment, the plurality of interconnectors (204, 400) is disposed in the second column (200b) of the bus bar (200), as exemplarily shown in the figure 2a. In another embodiment, the plurality of interconnectors (204, 400) is disposed in the first column (200b) of the bus bar (200) (not shown). The design of the bus bar (200) being configured such that the plurality of interconnectors (204, 400) is disposed in either the second column (200b) or the first column (200a) at a time.

Further each of the plurality of interconnectors (204, 400) comprising a neck fusing region (208) and a second region (210). The neck fusing region (208) is an inherent fusing element which separates one or more faulty cell from a plurality of cells (102) when the current value of the one or more faulty cells exceeds a predefined current value of each of the plurality of cells (102). In an example, a power unit (100) having the plurality of cells (102), and each of the plurality of cells (102) has a current rating of 0.5A. If the current value in one cell of the plurality of cells (102) is 0.6A, which is greater than the rated current rating, as detected by a battery management system (BMS) (not shown), the neck fusing region (208) short circuits the faulty cell by acting as a fusing element and thereby disconnects the faulty cell from the electrical circuit. This, in turn maintains the overall current and power rating of the power unit (100) and also prevents thermal runaway of the power unit (100).

The neck fusing region (208) of the each of the plurality of interconnectors (204, 400) is configured to protrude outwards from a lateral axis (X-X') of the second region (210) at a predetermined angle. In one embodiment, the predetermined angle is between a range of 2 to 30 degrees. The neck fusing region (208) is disposed downwardly to connect with the second region (210). The second region (210) is disposed below the neck fusing region (208) in one embodiment.

The second region (210) is divided further into a first segment (210a) and a second segment (210b). The second region (210) is substantially rectangular in shape in one embodiment. The first segment (210a) and the second segment (210b) is divided by a slit (214). The slit (214) is disposed centrally between the first segment (210a) and the second segment (210b) in one embodiment. The slit (214) is also configured to align with the neck fusing region (208) along a central longitudinal axis (Y-Y') in another embodiment. The second region (210) is configured to have a one or more openings (212) for electrically connecting a cell from the plurality of cells. The one or more openings (212) enable electrical connection of the second region (210) to at least one of a positive terminal or a negative terminal of each of the plurality of cells (102). In one embodiment, the electrical connection is enabled using at least one of spot welding, wire bonding, laser welding, and an ultrasonic welding.

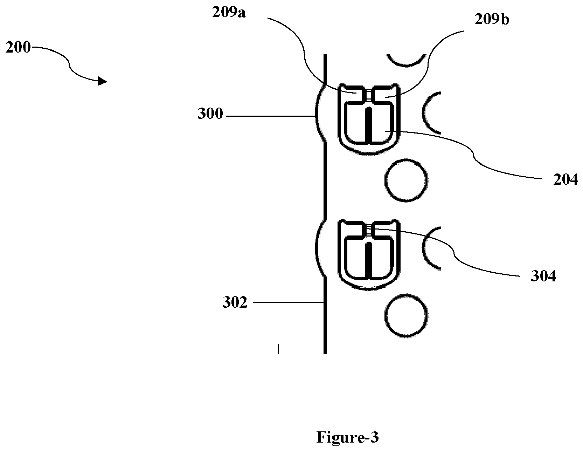

**Figure 3** illustrates a top view of a bus bar (200) of the power unit (100) comprising a plurality of interconnectors (204), in accordance with an embodiment of the present subject matter. The neck fusing region (208) of the each of the plurality of interconnector (204) is composed of one or more intermediate chords (304). The one or more intermediate chords (304) being made of metal in on embodiment. The one or more intermediate chords (304) are disposed on the top surface (202) of the bus bar (200) and the one or more intermediate chords (304) are surrounded by hollow portions (209a, 209b) on both left and right sides. In one embodiment, the bus bar (200) is configured to have undulated edges comprising a plurality of flat portions (302) and a plurality of curved portions (300).

In one embodiment, the neck fusing region (208) comprising one chord of the one or more intermediate chords (304). The neck fusing region (208) is disposed from a centre of at least one peripheral edge of the second region (210). The one chord of the one or more intermediate chords (304) is disposed in pair and being parallel to each other along the lateral axis (X-X') of the second region (210). In another embodiment, the neck fusing region (208) is disposed on peripheral edges above the second region (210). In an example, when the current value of one faulty cell is 6A, which is above the rated current value, the one chord of the one or more intermediate chords (304), being disposed in pair, merges with each other, and thereby leads to short circuiting and isolation of the faulty cell from the electrical circuit of the power unit (100).

**Figure 4b** illustrates a top perspective view of the second embodiment of an interconnector (400) of the bus bar (200), in accordance with an embodiment of the present subject matter. In another embodiment, the neck fusing region (208) of each of the plurality of interconnectors (400), is composed of two chords (304a, 304b) of the one or more intermediate chords (304). The two chords (304a, 304b) is separated by an air gap (402). The two chords (304a, 304b) are disposed in parallel along the longitudinal axis (Y-Y') of the second region (210).

Various embodiments of the invention provide a design of a power unit comprising an interconnector with an inherent fusing element. The fusing element is a neck fusing region comprising one or more configuration of one or more intermediate chords for isolating faulty cell in an electrical circuit of the power unit.

The present invention is a power unit comprising a plurality of cells being connected using one or more bus bars. The one or more busbars comprising a plurality of interconnectors. Further, each of the plurality of interconnectors comprising a neck fusing region and a second region. The neck fusing region is disposed downwardly to connect with the second region. The neck fusing region acts as a fusing element when a pre-defined passes through said neck fusing region.

The present claimed invention solves the technical problem of providing an external electrical fuse in a power unit for isolation of a faulty cell from the electrical circuit of the power unit and thereby preventing thermal runaway of the power unit.

Specifically, the claimed power unit has an inherent fusing element in the interconnectors of the power unit and thereby eliminates complex design and packaging of an external electrical fuse to the power unit.

Additionally, the power unit with an inherent fusing element reduces part count and reduces packaging constraints of fusing elements in the power unit.

The present invention also provides technical advantages of isolation of one or more faulty cells before the overall current rating of the power unit exceeds the total power rating of the power unit and thereby reduces the risk of thermal runaway of the power unit.

The present invention also provides technical advantages of prolonging the life of the power unit and also providing ease of replaceability of the power unit by simple replacing the faulty cells of the power unit.

In light of the above-mentioned advantages and the technical advancements provided by the disclosed power unit, the claimed steps as discussed above are not routine, conventional, or well understood in the art, as the claimed steps enable the following solutions to the existing problems in conventional technologies. Further, the claimed steps clearly bring an improvement in design of a power unit comprising an inherent fusing element and thereby eliminating the use of external electrical fuses for a power unit as the claimed steps provide a technical solution to a technical problem.

While the present invention has been shown and described with reference to the foregoing preferred embodiments, it will be apparent to those skilled in the art that changes in form, connection, and detail may be made therein without departing from the spirit and scope of the invention.

### Reference Numerals:

100 power unit
102 plurality of cells
104 bottom plate
200 bus bar
200a first column
200b second column
202 top surface
204, 400 plurality of interconnectors
206 plurality of holes
208 neck fusing region
210 second region
210a first segment
210b second segment
212 one or more openings
214 slit
209a, 209b hollow portions
300 plurality of curved portions of bus bar
302 plurality of flat portions of bus bar
304 one or more intermediate chords
304a, 304b two chords or the one or more intermediate chords
402 air gap

## Claims

1. A power unit (100) comprising:
a plurality of cells (102), wherein each of the plurality of cells (102) are connected using one or more busbars (200),
wherein each of the one or more busbars (200) comprises of a plurality of interconnectors (204, 400),
wherein each of said plurality of interconnectors (204, 400) comprising a neck fusing region (208) and a second region (210);
wherein said neck fusing region (208) being disposed downwardly to connect with said second region (210);
wherein said neck fusing region (208) being configured to act as a fusing element when a pre-defined current passes through said neck fusing region (208).

2. The power unit (100) as claimed in claim 1, wherein said second region (210) being disposed below said neck fusing region (208).

3. The power unit (100) as claimed in claim 3, wherein said neck fusing region (208) being configured to protrude outwards from a lateral axis (X-X') of said second region (210) at a predetermined angle, wherein said predetermined angle being between a range of 2 to 30 degrees.

4. The power unit (100) as claimed in claim 1, wherein said neck fusing region (208) comprising one or more intermediate chords (304).

5. The power unit (100) as claimed in claim 4, wherein said neck fusing region (208) comprising one chord of said one or more intermediate chords (304) and wherein said neck fusing region (208) being disposed from a centre of at least one peripheral edge of said second region (210).

6. The power unit (100) as claimed in claim 1, wherein said neck fusing region (208) being disposed on peripheral edges above said second region (210).

7. The power unit (100) as claimed in claim 4, wherein said neck fusing region (208) comprising two chords (304a, 304b) of said one or more intermediate chords (304) and wherein said two chords (304a, 304b) of said one or more intermediate chords (304) being separated by an air gap (402).

8. The power unit (100) as claimed in claim 1, wherein said second region (210) being configured to have a first segment (210a) and a second segment (210b), wherein said first segment (210a) and said second segment (210b) being configured to have one or more openings (212) for electrically connecting a cell from said plurality of cells (102).

9. The power unit (100) as claimed in claim 9, comprises a slit (214) between said first segment (210a) and said second segment (210b) of said second region (210).

10. The power unit (100) as claimed in claim 9, wherein said one or more openings (212) enable electrical connection of said second region (210) to at least one of a positive terminal or a negative terminal of each of said plurality of cells (102), wherein the electrical connection is enabled using at least one of spot welding, wire bonding, laser welding, and an ultrasonic welding.

11. The power unit (100) as claimed in claim 1, wherein said bus bar (200) comprising a first column (200a) and a second column (200b), wherein said plurality of interconnectors (204, 400) being disposed in one of said first column (200a) and said second column (200b).

12. A bus bar (200) comprising:
of a plurality of interconnectors (204, 400),
wherein each of said plurality of interconnectors (204, 400) comprising a neck fusing region (208) and a second region (210);
wherein said neck fusing region (208) being disposed downwardly to connect with said second region (210);
wherein said neck fusing region (208) being configured to act as a fusing element when a pre-defined current passing through said neck fusing region (208).

13. The bus bar (200) as claimed in claim 12, wherein said second region (210) being disposed below said neck fusing region (208).

14. The bus bar (200) as claimed in claim 12, wherein said neck fusing region (208) being configured to protrude outwards from a lateral axis (X-X') of said second region (210) at a predetermined angle, wherein said predetermined angle being between a range of 2 to 30 degrees.

15. The bus bar (200) as claimed in claim 12, wherein said neck fusing region (208) comprising one or more intermediate chords (304).

16. The bus bar (200) as claimed in claim 15, wherein said neck fusing region (208) comprising one chord of said one or more intermediate chords (304) and wherein said neck fusing region (304) being disposed from a centre of at least one peripheral edge of said second region (210).

17. The bus bar (200) as claimed in claim 12, wherein said neck fusing region (304) being disposed on peripheral edges above said second region (210).

18. The bus bar (200) as claimed in claim 15, wherein said neck fusing region (208) comprising two chords (304a, 304b) of said one or more intermediate chords (304) and wherein said two chords (304a, 304b) of said one or more intermediate chords (304) being separated by an air gap (402).

19. The bus bar (200) as claimed in claim 12, wherein said second region (210) being configured to have a first segment (210a) and a second segment (210b), wherein said first segment (210a) and said second segment (210b) being configured to have one or more openings (212) for electrically connecting said plurality of cells (102).

20. The bus bar (200) as claimed in claim 20, comprises a slit (214) between said first segment (210a) and said second segment (210b) of said second region (210).

21. The bus bar (200) as claimed in claim 20, wherein said one or more openings (212) enable electrical connection of said second region (210) to at least one of a positive terminal or a negative terminal of each of said plurality of cells (102), wherein the electrical connection is enabled using at least one of spot welding, wire bonding, laser welding, and an ultrasonic welding.

22. The bus bar (200) as claimed in claim 12, wherein said bus bar (200) comprising a first column (200a) and a second column (200b), wherein said plurality of interconnectors (204, 400) being disposed in one of said first column (200a) and said second column (200b).
